# EUROPEAN PATENT SPECIFICATION

(11) **EP 2 187 486 B1**
(45) Date of publication and mention of the grant of the patent: **23.04.2014**
(21) Application number: 08291059.7
(22) Date of filing: 12.11.2008
(51) Int. Cl.: H01S 3/067, H01S 3/16, G02B 6/02, C03C 13/04, B82Y 30/00, C01F 7/34, C01F 7/44, C03B 37/018, C03C 4/00, C03C 14/00, H01S 3/17

(54) **Amplifying optical fiber and method of manufacturing**
Verstärkende Lichtleitfaser und Herstellungsverfahren
Fibre optique d'amplification et procédé de fabrication

(43) Date of publication of application: 19.05.2010
(60) Divisional application: 12190157.3
(73) Proprietor: Draka Comteq B.V., 1083 HJ Amsterdam (NL)
(72) Inventor: Pastouret, Alain, 91300 Massy (FR); Burov, Ekaterina, 92100 Boulogne-Billancourt (FR); Boivin, David, 91160 Longjumeau (FR); Collet, Christine, 91540 Mennecy (FR); Cavani, Olivier, 91470 Angervilliers (FR)
(74) Representative: Algemeen Octrooi- en Merkenbureau B.V.

(56) References cited:
- WO-A-2007/020362
- FR-A- 2 889 876
- US-A1- 2003 087 742
- US-A1- 2003 111 644
- US-A1- 2003 175 003
- US-A1- 2007 108 413
- PATRA A: "Study of photoluminescence properties of Er<3+> ions in SiO2-GeO2 and Al2O3 nanoparticles" SOLID STATE COMMUNICATIONS, OXFORD, vol. 132, no. 5, 1 November 2004 (2004-11-01), pages 299-303, XP004561702 ISSN: 0038-1098
- ONDREJ PODRAZKY ET AL: "Use of alumina nanoparticles for preparation of erbium-doped fibers" LASERS AND ELECTRO-OPTICS SOCIETY, 2007. LEOS 2007. THE 20TH ANNUAL ME ETING OF THE IEEE, IEEE, PI, 1 October 2007 (2007-10-01), pages 246-247, XP031160543 ISBN: 978-1-4244-0924-2

## Description

The present invention relates to an amplifying optical fiber having a central core and an optical cladding surrounding the central core, wherein the central core is based on a silica matrix comprising nanoparticles, which nanoparticles are composed of a matrix material comprising doping ions of at least one rare earth element. Amplifying optical fibers can for example be used in optical amplifiers for high bit rate optical transmission links.

The present invention moreover relates to an optical amplifier and an optical laser comprising the present amplifying optical fiber. In addition, the present invention relates to a method for preparing a suspension of nanoparticles, which nanoparticles are composed of a matrix material comprising doping ions of at least one rare earth element. Furthermore, the present invention relates to a method for manufacturing the present amplifying optical fiber. In addition, the present invention relates to the use of the present optical fiber.

US 2003/0175003 of the present inventors relates to amplifying optical fibers comprising nanoparticles in the matrix of the central core. This publication is related to the improvement of the accessible gain shape of optical amplifiers by means of the presence of nanoparticles in the matrix, each kind of nanoparticle that is described having a specific rare earth element/matrix combination. The nanoparticles according to US 2003/0175003 are prepared via a sol-gel process using a metal compound forming the active element (e.g. erbium acetate). During this process this metal is complexed forming an organometallic core using first and second metal alkoxides (e.g. alumina and silica). The active metal is thus surrounded by oxides of metals originating from this first and second metal alkoxides.

The present invention is related to improving the efficiency of the amplification by the optical fiber within a specified gain shape, for example by lowering the required pump power consumption.

An optical amplifier is a device that directly amplifies an optical signal without the need to first convert the optical signal to an electrical signal. Amplifying optical fibers and notably so-called doped fiber amplifiers (DFAs) use a doped optical fiber as a gain medium to amplify an optical signal. The optical signal to be amplified and a pump laser are multiplexed into the doped optical fiber, and the signal is amplified through interaction with the doping ions as will be explained in more detail later on. These DFAs are involved in numerous optical applications.

Doping of optical fibers with the rare earth element erbium (Er) gives so-called Erbium Doped Fiber Amplifiers (EDFAs). These EDFAs are used in long and ultra long haul optical telecommunication networks at 1550 nm to amplify transmitted optical signals. These EDFAs can be efficiently pumped with a pump laser at a wavelength of 980 nm or 1480 nm, and exhibit gain in the 1550 nm region. Gain is defined as output signal power divided by input signal power. Input signal power corresponds to the power of the optical signal at the entry of the amplifying optical fiber. Output signal power corresponds to the optical signal power at the exit of the amplifying fiber, i.e. the amplified signal. The output power is the sum of input signal power and the pump energy which is transformed into signal power; this pump energy equals the pump power times the pump efficiency. Gain is hence a measure of the ability of the amplifier to increase the power of an optical signal.

Ytterbium (Yb) doping is often used in optical fibers for EDFAs to improve the erbium pump signal absorption efficiency through energy transfer between Yb and Er. Moreover, Yb ions can be also used alone in high power laser applications.

Optical fibers for EDFAs generally present a central core composed of a silica-based matrix containing doping with erbium ions at an erbium ion concentration between 250 ppm (0.025 wt. %) and 1000 ppm (0.1 wt. %). The erbium ions are the source of optical gain and the gain results from the stimulated emission of electronic transitions to a lower energy state from a higher energy state previously populated by a pump source.

These optical fibers for EDFAs frequently comprise co-doping with other elements to improve the amplification, for example to broaden and/or flatten the amplifying band or amplifying window, being the range of optical wavelengths for which the amplifier yields a usable gain. One example is a co-doped optical fiber with erbium and aluminum allowing amplification in the 1520-1570 nm wavelength division multiplex (WDM) C-Band. Other applications and other band positions can be reached by the right choice of the rare earth element, either alone or in combination of two or more thereof.

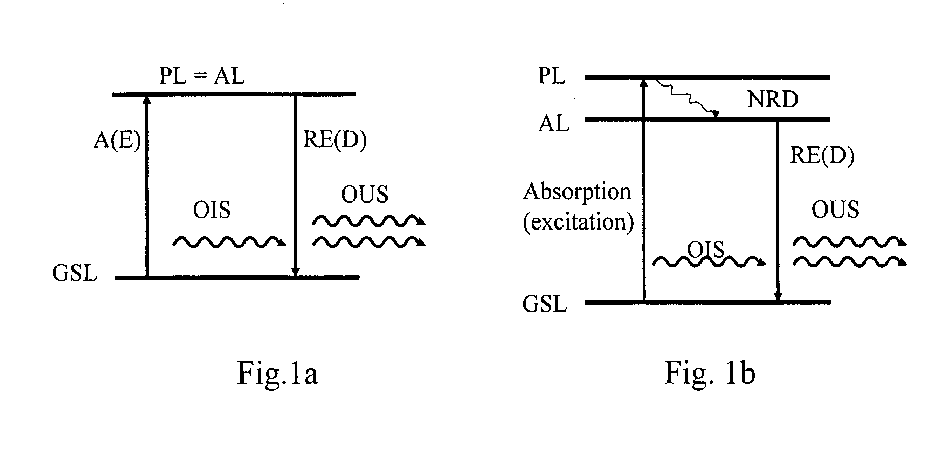

It is well known that optical amplification in a rare earth doped optical fiber is obtained by introducing into the optical fiber a pump signal that excites rare earth ions (for example, Er³⁺ ions in EDFAs). When an optical signal passes through this part of the optical fiber, a photon similar to the incident photon can be emitted from the ions that are in excited state, which ion than returns to the ground state. This is explained in more detail in Figure 1 which is described later one. The incident optical signal will then be doubled and the rare earth ion is ready for another cycle of excitation and desexcitation. This process is called stimulated emission. If such part of a fiber is combined with a resonant cavity composed of two mirrors or of Bragg gratings, a laser optical fiber is obtained. The wavelength and power of said laser optical fiber depends on the nature and amount of the rare earth element used as dopant.

There is a continuous increasing demand in WDM systems which will give rise to increasing markets for better and faster systems. Such new generation systems will have to include more efficient amplifiers and lasers which are compatible with high power applications.

One key point in the development of more efficient optical fiber amplifiers is the possibility to overcome gain limitation or saturation. Output signal power is limited due to a finite number of rare earth ions and pump power. So that, when the input power is low, one can have a high gain because the rare earth ions and the pump power are not saturated. If input power increases, one can increase the output power in the same way, by concurrently increasing the pump power, so that the gain level can be maintained. When we reach the limit of pump power and rare earth concentration, the output power reaches its limit, so that the gain cannot be maintained. If the input signal power increases above the pump power limit, the gain decreases. The saturation of the gain has been reached. It explains why at low input power signal, one can have an increase in output power and high gain. It also explains why at high input signal power, output signal power is maximal and the gain decreases to reach a minimum. Such gain limitation is imposed by the pumping schemes that are presently used. The power of present pumping schemes is limited to commercially available 750 mW laser pumps. Moreover, for cost and technical reasons, such as heat dissipation and power consumption, present pumping schemes are often limited to a combination of only two pump which limits the total pump power to 1.5 W (2 x 750 mW). This dual pump scheme imposes a limit in the amplifier gain and output power which are up-to-now incompatible with the requirements for new generation amplifiers. This problem of gain saturation becomes increasingly important as the input signal power increases.

The object is to obtain higher output power or get a given output power with lower pump energy. This can be obtained by increasing the efficiency of the amplifying medium (the rare earth doped fiber), which corresponds of the technical problem to be solved of the present invention.

A second key point in the development of more efficient amplifiers is the possibility to decrease the costs of the several components for a given output power and a given amplifying band or window. This can be achieved by reducing the required pump power since the energy consumption of the pump in an amplifier represents a major part of the utilization budget and consequently, significant pump power saving will result in a desirable cost reduction.

To reach the two above-mentioned key points the efficiency of the rare earth doped optical fiber has to be improved, which is an object of the present invention.

The publication of B.S. Wang et al. "Novel erbium doped fiber for high power applications" in Passive Components and Fiber-based Devices, in Proceedings of the SPIE, volume 5623, pp. 411-417 (2005), reports that high power applications require optimization of both the design of the optical fiber waveguide and the design of the doping composition. This publication discloses that optimization of the optogeometrical parameters of the optical fiber can improve pump power conversion efficiency (PCE) by optimizing the overlap between pump mode field and the erbium ions. This optimization obtained by decreasing the numerical aperture and by increasing the cut-off wavelength of the optical fiber, does not have a detectable effect on the bending losses of the optical fiber, by decreasing the numerical aperture and by increasing the cut-off wavelength of the optical fiber. In addition, this publication discloses that doping improvement can be obtained by increasing the erbium ion concentration and the erbium ion homogeneity along the fiber length. The latter improvement can be effected by a high aluminum ion concentration in the core of the optical fiber, ensuring at the same time certain spectral shape characteristics and limiting the clustering of the erbium ions.

However, the solution disclosed in this publication is not sufficient for pump powers exceeding 350 mW. Moreover, the high aluminum ion concentration is not well compatible with the desired low numerical aperture, since aluminum ions are known to strongly increase the refractive index of the optical fiber core. Lastly, it is known that a high aluminum ion concentration will induce an increase in the background losses of the optical fiber, possibly dramatically impacting the efficiency of the gain medium.

The publication of S. Tammela et al., " Potential of nanoparticle technologies for next generation erbium-doped fibers" OFC'04,. OFC2004 Technical digest, FB5 (2004), discloses a manner to increase gain medium efficiency through a high rare earth ion doping incorporation and a more homogeneous dispersion of rare earth ions within the optical fiber core. This is obtained by using an optical fiber manufacturing method involving a so-called Direct Nanoparticle Deposition (DND) process. This DND-process is an alternative technical solution to the known Modified Chemical Vapor Deposition (MCVD) process frequently used to dope optical fiber cores. This publication discloses the use of a manufacturing process based on an Outside Vapor Deposition (OVD) technique by which the silica-based matrix and the doping are simultaneously realized. Nanoparticles composed of rare earth doped silica powder, possibly co-doped with other elements, are formed when element precursor reactants are simultaneously introduced into the flame of a specially designed torch. The nanoparticles that are produced are then directly projected and vitrified or sintered on a rotating rod to provide the doped silica layers that will constitute the core of the optical fiber. This publication discloses that the DND-process provides a homogeneous dispersion of rare earth ions within the core of the optical fiber at high rare earth ion concentration due to fusion of the nanoparticles with the silica material during vitrification of both.

Such a manufacturing process however does not allow preserving the structure of the nanoparticles within the central core of the amplifying optical fiber; these nanoparticles are doped silica particles, such as those obtained by a vapor phase deposition process, and sintered at high temperature to form the glass layers that will give rise to the primary optical preform. Hence there are no nanoparticles present in the resulting optical fiber since the matrix of the nanoparticles has fused with the matrix of the central core during the manufacturing of the optical fiber. As a consequence, the close chemical environment of the doping ions of the rare earth element, which environment governs the main gain characteristics through fluorescence properties of the doping ions, cannot be finely controlled using this technique, which is a disadvantage. This will then limit the possible optimization of optogeometrical parameters independently from doping characteristics. Consequently, increase the efficiency of the gain medium for a specified gain shape will be limited.

It is known to insert rare earth dopants within a fiber core by incorporating nanoparticles doped with rare earth elements using a modified chemical vapor deposition (MCVD) process. For example, the documents EP-A2-1917702 and WO-A2-2007/020362 disclose optical fibers containing nanoparticles in the central core of the amplifying optical fiber. The nanoparticles disclosed in these documents contain doping ions of a rare earth element and in addition doping ions of at least one element improving the signal amplification, such as aluminum, lanthanum, antimony, bismuth, or other. However, due to the design, chemical composition, size and/or concentration of these nanoparticles, the characteristics of the process for including the doping ions in the central core or the optogeometrical characteristics do not guarantee the maximization of the gain medium efficiency at high pump power regime.

So, there is still a need for an amplifying optical fiber doped with rare earth elements allowing maximizing the gain medium efficiency in a specified gain configuration, which is an object of the present invention.

One or more of the above-mentioned objects are achieved by an amplifying optical fiber according to claim 1, a use of an amplifying optical fiber as defined in claim 11 and a method for manufacturing an amplifying optical fiber as defined in claim 14.

Hence in the present optical fiber distinct nanoparticles are present which can be distinguished from the surrounding matrix of the central core of the optical fiber. The concentration of rare earth doping ions gives rise to optimal results since such a concentration gives rise a good gain and since the dispersion of rare earth doping ions within the nanoparticles is such that the minimal distance between rare earth ions is above the minimal distance where two rare earth doping ions can be assimilated as a pair or a cluster. This assimilation leads to a so-called concentration quenching phenomenon and a resulting decrease in amplification efficiency. The distance between two rare earth ions should according to the present inventors be equal to or higher than 0.4 nm, preferably equal to or higher than 0.6 nm, more preferably 0.8 nm which corresponds to a minimal separation of four atoms respectively 6 and 8 between two rare earth doping ions.

In accordance with the invention, the distance of all of the rare earth doping ions in the nanoparticles is at least 0.4 nm.

The present invention is described in more detail below with regards to the drawings in which:
Figure 1 discloses amplifying schemes for erbium with two types of pump lasers; Figure 1a shows a two-level excitation scheme for pumping with a 1480 nm laser and Figure 1b shows a three-level excitation scheme for pumping with a 980 nm laser;
Figure 2a shows a schematic side view of an optical fiber according to the invention; Figure 2b shows a cross-section of one single nanoparticle comprising ions of a rare earth element;
Figure 3a shows a method of preparing the nanoparticles according to the present invention; Figure 3b shows a method of manufacturing an amplifying optical fiber according to the present invention.
Figure 1 discloses two possible amplification schemes for an erbium doped amplifying optical fiber. Figure 1a discloses an amplification scheme for erbium using a 1480 nm pump laser. The lower horizontal line depicts the ground state energy level (GSL) of the erbium electrons. Upon pumping with the pump laser electrons are excited by means of laser energy absorption and move to a higher energy level following the left arrow of absorption (excitation) or A(E). The electrons are transferred to the pump level (PL) which is the same as the amplifying level (AL). Upon entry of an optical signal into the optical fiber, which optical signal is depicted by the single wave-line arrow on the left (optical input signal or OIS), the electrons in the amplifying level fall back to the ground state level while radiation emission or desexcitation (RE(D)) takes place following the right arrow. During this phase the optical signal is doubled as visible by the two wave-line arrows on the right (optical output signal or OUS).
Figure 1b discloses an amplification scheme for erbium using a 980 nm pump laser. This scheme is slightly more complex and has an additional, third energy level. The lower horizontal line depicts the ground state energy level (GSL) of the erbium electrons. Upon pumping with the laser electrons are excited by means of laser energy absorption and move to a higher energy level following the left arrow of absorption (excitation) or A(E). The electrons are transferred to the pump level (PL) which is not the same, but higher than the amplifying level (AL). An additional step of non-radiative desexcitation (NRD) takes place wherein the energy difference between the pump level and the amplifying level is taken up by the matrix material of the nanoparticle and the electron is hence transferred from the pump level to the amplifying level. Upon entry of an optical signal into the optical fiber, which optical signal is depicted by the single wave-line arrow on the left (optical input signal or OIS), the electrons in the amplifying level fall back to the ground state level while radiation emission or desexcitation (RE(D)) takes place following the right arrow. During this phase the optical signal is doubled as visible by the two wave-line arrows on the right (optical output signal or OUS).

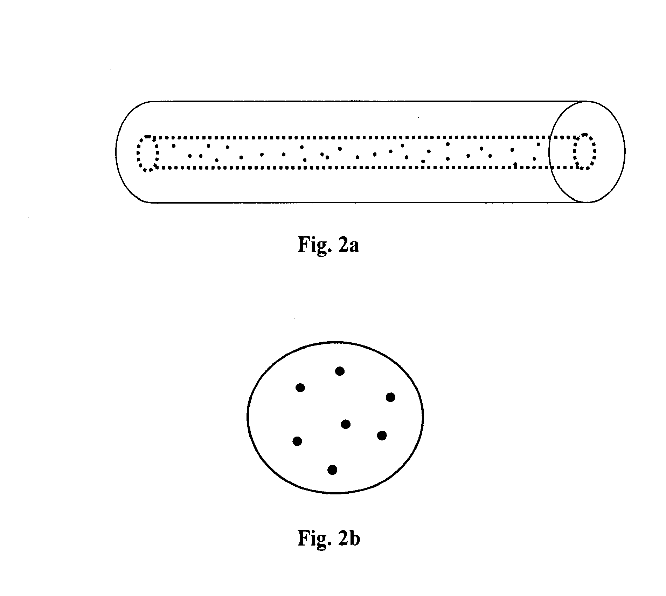

Figure 2a schematically shows a fiber according to the invention. The central core is depicted by a broken line and the black dots represent nanoparticles comprising rare earth ions; the central core is surrounded by the optical cladding. Figure 2b shows a cross-section of a single nanoparticle wherein the black dots are separate rare earth ions embedded in the matrix material of the nanoparticle

According to the present inventors it is necessary to improve the intrinsic efficiency of the process by which each rare earth ion absorbs the pump signal and transfers this to the excited state and following emits a photon which is similar to the incident optical signal while falling back into the ground state level.

It is also required according to the present invention to adapt the optogeometrical parameters of the central core of the optical fiber as well as its doping characteristics, being the characteristics of the optical guidance medium, in order to maximize the overall gain per unit fiber length. The improvement of the efficiency by maximization of the gain and minimization of the pump power consumption for a given gain value is limited by the interdependence of several of the parameters. Consequently, even if the key parameters that influence the efficiency are known - for example rare earth ion concentration, rare earth ion dispersion and rare earth ion close chemical environment - it is not possible to achieve the maximum effect of each one of the parameters, because the are linked together. The solution of the present invention hence can be found in an optimal balance between these parameters as disclosed in claim 1.

The incorporation of doping ions of rare earth element(s) in the matrix material of nanoparticles, wherein the solubility and dispersion of the doping ions in the matrix material of the nanoparticles is closely controlled, by respectively the concentration and distance of the doping ions, gives rise to the required properties.

The doping ions concentration in the central core of the present amplifying optical fiber is equal to or higher then 0.01 wt%, preferably equal to or higher than 0.1 wt% and equal to or lower than 1 wt%, preferably equal to or lower than 0.2 wt.%

The doping ions of the rare earth element are only located in the nanoparticles and not in the matrix of the central core of the optical fiber. This means that the doping ion concentration in the central core can be adapted by increasing the number of nanoparticles within the central core, increasing the doping ion concentration within each of the nanoparticles, or increasing the size of the nanoparticles or a combination thereof, depending on the application.

It is of course possible to use several types of nanoparticles each having independently chosen doping ion concentration, matrix constitution and size.

The doping ion concentration in the nanoparticles is between 0.1 wt. % and 20 wt. %, preferably between 0.5 wt. % and 15 wt%. This allows obtaining the required concentration of doping ions in the central core of the amplifying optical fiber according to the present invention.

The two features of doping ion concentration and doping ion distance (also called the dispersion) can be most easily obtained in certain matrixes, for example matrixes having a certain level of aluminum, phosphorus, or calcium, depending on the requirements.

In addition, the matrix of the nanoparticles is selected in such a manner as to ensure certain gain characteristics for the rare earth doping ions. The desired gain characteristics depend on the application, each application will have a specific need concerning the amplifying gain shape.

For example, WDM applications will require wide amplifying band, while single channel amplification or laser applications will require intense and sharp band. The gain shape characteristics of a rare earth ion is governed by its close chemical environment within the central core of the optical fiber, so that controlling neighbor elements of the rare earth doping ions is important to fit the right gain shape. Some elements are known to widen the gain band associated to a specific rare earth, such as fluoride, aluminum, zirconium, and tellurium. Other elements are known to give rise to narrow band, such as sodium or phosphorus, while keeping high rare earth solubility property. Moreover, the rare earth near chemical environmental structure will have also a strong influence on band width. For example, amorphous disordered structures will favor band widening while crystalline phases or weakly disordered amorphous structures will favor sharp intense bands. Using rare earth incorporation into optical fiber by means of specific nanoparticles will allow a better tailoring of rare earth environment compared to a random doping process.

A person skilled in the art will be able to select the most optimal matrix for the nanoparticles depending on the desired characteristics. The use of the present method for preparing the nanoparticles according to the present invention enables the constructing of nanoparticles having the matrix adapted to the application since the nanoparticles are synthesized before being incorporated into central core of the optical fiber.

In addition, it is preferred that the matrix of the nanoparticles is selected in such a manner as to have a phonon energy favoring rare earth desexcitation by stimulated emission.

In one embodiment of the present invention, related to a two-level amplifying scheme as depicted in Figure 1a, the matrix material of the nanoparticles has a phonon energy that is lower than 20 % of the energy gap between the amplifying level and ground state level of the rare earth element during pumping, more preferably lower than 15%. For better efficiency of the desexcitation of the doping ions the matrix of the nanoparticles should have a phonon energy that is limited or restricted to a certain window. Outside this window, the efficiency will be decreased since energy will be lost due to transfer of energy from the amplifying level to the matrix network. Excited electrons will hence be lost for signal amplification and hence the efficiency is decreased.

In another embodiment of the present invention, related to a three-level amplifying scheme as depicted in Figure 1b, the matrix material of the nanoparticles has a phonon energy of at least 25% of the energy gap between the pump level and the amplifying level of the rare earth element during pumping and at most 22 %, preferably 18.5% of the energy gap between the amplifying level and ground state level of the rare earth element during pumping. In this embodiment there is a minimum level of phonon energy required for the matrix material of the nanoparticles. Since the pump level and the amplifying level are not the same a certain transfer of energy is required towards the matrix material in order to transfer the electron from the pump level to the amplifying level. Since only an electron in the amplifying level can give rise to desexcitation and signal amplification.

It is desirable to limit the probability of other radiative and non-radiative fluorescence extinction processes in addition to the processes depicted in Figure 1.

Any other processes will significantly interfere with the amplification of the optical signal. A non-limitative list of examples of these processes are multiphonon relaxation, transfer to defects or impurities in the matrix material, ion-ion transfer (so-called cross-relaxation), ETU for Energy Transfer Up-conversion, excited state absorption. In an amplifying optical fiber, the measured undesirable fluorescence decay from the amplifying level is viewed as the sum of different phenomenon probabilities. Wₘₑₐₛ = W_{rad} + W_{MP} + W_{CR} + W_{ET}, wherein Wmeas is the measured fluorescence decay, W_{rad} is the probability of radiative desexcitation, W_{MP}, W_{CR} and WET are non-radiative desexcitation processes, respectively the probability of multiphonon relaxation, the probability of cross-relaxation and the probability of energy transfer to neighboring impurities and defects.

A decrease of the amplifying process efficiency is mainly due to these types of non-radiative phenomena, which phenomena depend strongly on the vibration energy of the matrix of the nanoparticles, which vibration energy is quantified as energy quantum or phonon. The higher the matrix phonon energy is, the higher the probability for these processes to occur. In the frame of amplification, one have thus to find the right matrix phonon level. In this view, one can define a window in which matrix phonon energy should be restricted in order to benefit to amplification.

For example, if we consider erbium amplification with a 980 nm pumping, the energy gap between rare earth pump and amplifying levels is around 4000 cm⁻¹ and the energy gap between rare earth amplifying and ground state levels is around 6500 cm⁻¹, so that NP matrix phonon energy should be comprised between 1000 and 1400 cm⁻¹. more preferably between 1000 and 1200 cm⁻¹. Silicate, phosphate, aluminate, or multi component matrixes including Si, P and Al oxides in thermodynamically stable composition will fit the required phonon energy level.

Moreover, all desexcitation processes involving energy transfer between excited rare earth ions and defects or impurities (mainly OH) of the nanoparticles could be avoided or strictly limited due to the manufacturing process of the nanoparticles and their incorporation process within the central core of the optical fiber.

It is an important aspect of the present invention, as mentioned already before, that the nanostructure of the nanoparticles is maintained during incorporation of the nanoparticles into the amplifying optical fiber according to the present invention. This means that the structure of the nanoparticle has to resist the high temperatures that are linked to the collapsing and fiber drawing processes. For example, the nanoparticle should be able to resist temperatures higher than 1800 °C or even 2000 °C. Such temperature dependence can be reached by correct selection of matrix material for the nanoparticles. Hence the nanoparticles should have a matrix material that is resistant to temperatures of at least 1800 °C, preferably at least 2000 °C. Non-limiting example of material that would be suitable as nanoparticle matrix material is alumina.

One can also envisage other nanoparticle design, for example a core shell structure in which a nanoparticle is build up out of a core made of a core matrix material which core is surrounded by a shell which is made of a highly resistant matrix material. This dual structure allows getting highly resistant nanoparticles independent of the core matrix material of the nanoparticles. So, the nanoparticle matrix can be chosen to fit the right amplifying characteristics, even if this core matrix material of the nanoparticles is not able to resist to high temperatures. The nanoparticle resistance to high temperature is brought by the nanoparticle shell nature.

The matrix material of the nanoparticles is alumina (Al₂O₃) or a combination of alumina (Al₂O₃) and phosphorus oxide (P₂O₅).

In a preferred embodiment, the matrix material of the nanoparticles is amorphous. In order to optimize the fiber optical core transparency which is an important parameter, a low light scattering due to the presence of the nanoparticles in the central core should be ensured. If the nanoparticles have a different refractive index as the central core, light scattering will occur. In this view, the structure of the nanoparticle should be preferably amorphous since crystalline nanoparticles give higher light scattering. If crystalline nanoparticles are designed it is then important to finely define their optimum size, taking into account their refractive index and doping ion concentration.

The rare earth content is the central core of the optical fiber can also be linked to the attenuation of rare earth ions at absorption peak expressed in dB/m. This peak should be between 2 and 20 dB/m.

In an embodiment of the present invention, the silica-based matrix of the central core is doped with at least one element selected from the group, consisting of germanium, phosphorus, fluoride, boron and one or more combinations thereof. These doping elements can be used to increase or decrease the refractive index of the central core to the desired level.

Preferably, the total concentration of alumina in the central core is equal to or lower than 4 wt. %, preferably equal to or lower than 3.5 wt. % based on the total weight of the central core. This limit has to do with the fact that alumina from the nanoparticles can give rise to a high refractive index difference with the outer cladding. In the case of too high a concentration of alumina light scattering will increase which is undesirable.

In a preferred embodiment, the rare earth element is selected from the group, consisting of erbium, ytterbium, thulium, or a combination of these elements, preferably erbium or a combination of erbium and ytterbium.

It is possible that additional elements are present in the matrix of the nanoparticles in order to improve several matrix properties, such as for example solubility of the rare earth doping ions. Examples of such additional elements are calcium, aluminum, sodium, or phosphorus.

Particularly, if alumina is used as a major part of the matrix material of the nanoparticle the rare earth solubility is good.

As the number of rare earth ions per nanoparticles can be controlled, for a given nanoparticle size, the final rare earth concentration within the central core or the optical fiber will be driven by the concentration of the nanoparticles in the fiber core, that is to say, the number of nanoparticles incorporated during the doping step. The total rare earth concentration within the central core of the optical fiber will be determined by a skilled person according to the application and can be reached by adjusting either the concentration of nanoparticles in the central core (=[NP]_{core}) or the rare earth doping ion concentration in each of the nanoparticles ([RE]_{NP}). The constant parameter is the total rare earth concentration in the core, given by the product [NP]_{core} X [RE]_{NP}. As an example, in the case of high input signal power, the relation between [NP]_{core} and [RE]_{NP} will be adjusted to ensure 100% rare earth inversion and minimum pump power consuming to reach a given output power signal. In this view, one could reach the desired rare earth concentration within the central core of the optical fiber either by preferring high [NP]_{core} and low [RE]_{NP}, or otherwise low [NP]_{core} and high [RE]_{NP}.

Preferably, the optical fiber has background attenuation losses equal to or lower than 4 dB/km at 1200 nm, preferably equal to or lower than 2 dB/km at 1200 nm.

Preferably, the size of the nanoparticles is equal to or lower than 100 nm, preferably equal to or lower than 50 nm, more preferably equal to or lower than 20 nm. If the refractive index of the nanoparticles is close to the refractive index of the central core, the size of the nanoparticles can be as high as several tens of nanometers due to less light scattering. However, if the refractive indexes of the nanoparticles and the central core are significantly different, the size of the nanoparticles should be lower than 20 nm due to more light scattering.

The size of the nanoparticles is preferably at least 2 nm, more preferably at least 5 nm.

According to the present invention, the optical guidance structure can be optimized independently from the gain performance, since the matrix of the nanoparticles (responsible for gain performance) can be adapted independently from the matrix of the central core (responsible for optical guidance structure). Thus it is possible to adapt the optogeometrical parameters to optimize amplifier efficiency, for example by selecting a certain cut-off wavelength and refractive index of the central core, without affecting the optical response of rare earth doping ions.

The transparency of the central core of the optical fiber in the application wavelength window is an important parameter for the overall gain that can be reached by the amplifying medium. In order to obtain such transparency the attenuation threshold of the optical fibers should be as low as possible. In doping processes according to the prior art without the use of nanoparticles the optical performances and the central core matrix composition are strongly linked, making it difficult to adapt the central core optical transparency independently from the rare earth close chemical environment. For example, WDM doped fibers for EDFAs will necessitate a high aluminum concentration to ensure sufficient aluminum atoms in the erbium environment. However, this results in loss in transparency and hence loss in efficiency, which is undesirable.

An optical fiber is conventionally composed of (i) an optical core, having the function of transmitting and optionally amplifying an optical signal, and (ii) an optical cladding, having the function of confining the optical signal in the core. For this purpose, the refractive indexes of the core (nc) and of the cladding (ng) are such that nc > ng. As is well known in the art, the propagation of an optical signal in a single-mode optical fiber is broken down into a fundamental mode (known as LP01) guided in the core, and into secondary modes guided over a certain radius in the core-cladding assembly.

For optical fibers, the refractive index profile is generally set forth in terms of the difference in refractive index value between two points on the graph of the function associating the refractive index with the radius of the fiber. The external cladding functions as an optical cladding and has a substantially constant refractive index; this optical cladding is generally composed of pure silica but can also contain one or more dopants. The optical fiber refractive index profile is referred to as a "step" profile, a "trapezoidal" profile, or a "triangular" profile for graphs having the respective shapes of a step, a trapezoid, or a triangle. These curves are generally representative of the theoretical or reference index profile (i.e., set profile) of the fiber. Fiber manufacturing constraints may lead to a slightly different profile in the actual fiber. The amplifying optical fiber according to the present invention preferably has a step index refractive index profile.

The invention proposes an amplifying optical fiber, including, from the center toward the periphery, a central core and an external optical cladding. The central core has a radius r, preferably between 3 and 6 µm, and a positive refractive index difference Δ, preferably between 6 x 10⁻³ and 20 x 10⁻³ with the external optical cladding. The fiber according to this invention further preferably has a mode field diameter (MFD) between 4 and 7 µm at a wavelength of 1550 nm and a numerical aperture between 0.16 and 0.20 nm, preferably between 0.17 to 0.19 to obtain an optimal pump confinement. The present amplifying optical fiber preferably has a cut-off wavelength (λ_{c}) below 1300 nm, preferably below 1200 nm, in order to obtain high pump confinement.

The pump confinement or pump conversion efficiency (PCE) is preferably above 90 % at a pumping wavelength of 980 nm.

The signal confinement at 1550 nm should be at least 70 % and is defined as the overlap between the erbium emission and the signal mode field.

Preferably, an optical fiber is designed taking into account a) the rare earth doping ions efficiency, through control of the chemical environment and concentration of the doping ions; b) optogeometrical parameters of the optical fiber independently; c) a high transparency of the matrix of the central core of the optical fiber in the application wavelength window.

The present invention also relates to the use of an amplifying optical fiber according to the present invention in an optical amplifier or an optical laser.

In addition, the present invention relates to an optical amplifier or an optical laser comprising at least a length of an amplifying optical fiber according to the present invention.

Preferably, an optical amplifier comprising a part of a fiber according to the invention can be used in a high power regime to reach 23 dBm signal output power with a pump power lower than 550 mW, or 25 dBm signal output power with a pump power lower than 1000 mW, or 27 dBm signal output power with a pump power lower than 1500 mW.

The present invention also relates to a method for preparing a suspension of nanoparticles, which nanoparticles are composed of a matrix material comprising doping ions of at least one rare earth element.

US 2003/0175003 of the present inventors mentions a method of preparing nanoparticles by means of either a laser ablation process or a modified sol-gel process. However, these processes cannot produce the nanoparticles having the doping ion distance as required by the present invention. Therefore, the invention proposes a different method of producing nanoparticles. This process uses so-called soft chemistry starting from inorganic salt precursors, comprising the steps of:
a) Providing at least one compound comprising at least one ion of a rare earth element;
b) Providing at least one compound comprising at least one ion to form the matrix material of the nanoparticle;
c) Adding the compounds obtained in step a) and step b) to an aqueous solution having a pH in the range of 3-12, preferably between 6 and 10 under stirring in order to obtain the suspension of nanoparticles.

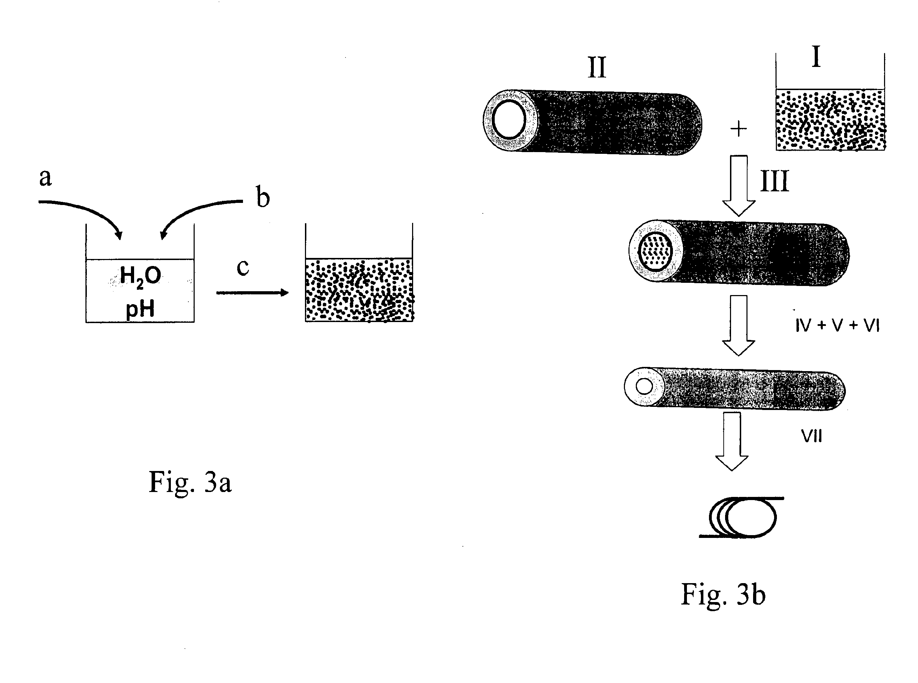

Figure 3a shows this process graphically. In step a) the rare earth salt is provided. In step b) the compound is provided which will give rise to the matrix of the nanoparticle. Preferably, the ratio of the amount of compound a) to the amount of compound b) is 1:10 to 300.

In a preferred embodiment of the present method for preparing a suspension of nanoparticles, the at least one compound in step a) is selected from the group consisting of erbium salts, preferably erbium acetate, erbium nitrate, erbium acetylacetonate, erbium chloride and one or more combinations thereof.

In another preferred embodiment of the present method for preparing a suspension of nanoparticles, the at least one compound in step b) is selected from the group consisting of aluminum salts and phosphorus salts or a combination thereof, preferably from the group consisting of aluminum nitrate and phosphorus trichloride oxide and a combination thereof.

In another preferred embodiment of the present method for preparing a suspension of nanoparticles, step c) is carried out at a temperature between 10 and 50°C, preferably between 20 and 40 °C.

In addition, the present invention relates to a method for manufacturing an amplifying optical fiber according to the present invention.
US 2003/0175003 of the present inventors mentions a method of manufacturing an amplifying optical fiber. However, the present invention relates to a novel process including a heating step to strengthen the structure of the nanoparticles before the hollow tube comprising the nanoparticles is sintered and collapsed.

The method according to the present invention comprises the steps according to claim 14 and is depicted in Figure 3b

In order for the designed nanoparticles to be really efficient in the specified optical performances, the matrix of the nanoparticles has to be preserved as a nanostructure within the fiber core an thus resist to stress and temperature conditions experienced during e.g. MCVD preform manufacturing process and fiber drawing. This can be obtained by the thermal treatment of step IV), realized after their incorporation step through impregnation and before the steps of layer sintering and preform collapsing. This step can be carried out at temperatures equal to or higher than e.g. 500 °C, equal to or higher than e.g. 800 °C, equal to or higher than e.g. 1000 °C, or equal to or higher than e.g. 1200 °C.

For example, it is known that one can transform alumina into more thermally resistant phases by an appropriated treatment at temperatures equal to or higher than 1000°C.

The present invention is furthermore explained by the following, non-limiting example give for explanation purposes only.

### Example

An erbium doped optical fiber for high efficiency amplification in the C-band is obtained by the following method.

Firstly, nanoparticles comprising erbium doping ions are prepared. Aluminum nitrate and erbium nitrate are co-precipitated in an aqueous solution whose pH is maintained equal to 9 using sodium hydroxide.

The erbium salt concentration is 3 mmoles/I and the molar ratio between aluminum salt and erbium salt is around 200, in order to guarantee the required dispersion of erbium doping ions in the alumina matrix of the nanoparticle. This should lead to erbium ions having a chemical environment able to reach the expected spectroscopic characteristics. The size of the precipitated nanoparticles is approximately 25 nm.

After precipitation and nanoparticle washing, pH is adjusted to 6 by addition of hydrochloric acid. A stable aqueous suspension of Al/Er co-doped nanoparticles with a known erbium concentration is obtained. This suspension is then used to impregnate the porous silica-based central core layer of a hollow silica tube obtained via MCVD process. For this purpose the hollow tube is brought into an upright position and the suspension is poured into the hollow tube.

The refractive index difference between central core and cladding has been adjusted to 13 x 10⁻³ by using germanium in the matrix of the central core. After the impregnation, excess of the suspension is removed from the hollow tube and the tube is dried and thermally treated at a temperature of approximately 1100 °C during 1 hour in order to dry and strengthen the nanoparticle structure within the central core. After that the resulting doped core layer is sintered. The doped tube is then collapsed at a temperature of approximately 2200 °C to give the primary preform which is then sleeved to adapt the ratio of the diameter of the central core and the diameter of the optical cladding. The final preform is finally drawn into an optical fiber using a standard drawing technique.

An erbium doped fiber is obtained having an erbium attenuation of 6 dB/m at 1528 nm as measured by the maximum absorption, which corresponds approximately to 0.036 wt. % of erbium in the total core weight. The optical fiber has a cut-off wavelength of 1150 nm, a refractive index difference with the optical cladding op 13 x 10⁻³, a numerical aperture of 0.19, an MFD at 1550 nm of 5.6 micrometers and a central core diameter of 5 micrometer. The optical fiber presents low losses of 1.6 dB/km at 1220 nm. The pump confinement at 980 nm is equal to 90 % and the signal confinement, is 70%.

The fiber presents high efficiency at high input signal power and can be used as high power / low gain EDFA extender in the WDM C-band. The fiber allows saving up to 10% of pump power at 25dBm output signal power. The fiber can also be used to reach unprecedented 26 dBm signal output power in a dual pump amplifying scheme involving two 750 mW 980 nm laser pumps.

The present invention is further characterized by the appended claims.

## Claims

1. An amplifying optical fiber having a central core and an optical cladding surrounding the central core, wherein the central core is based on a silica matrix comprising nanoparticles, which nanoparticles are composed of a matrix material comprising doping ions of at least one rare earth element and which matrix material is alumina (Al₂O₃) or a combination of alumina (Al₂O₃) and phosphorus oxide (P₂O₅), wherein the concentration of the doping ions is between 0.01 wt. % and 1 wt. %, preferably between 0.01 wt. % and 0.2 wt. % of the total weight of the central core and wherein the distance between the doping ions in the nanoparticles is at least 0.4 nanometers and wherein the concentration of doping ions in the nanoparticle is between 0.1 and 20 wt. % of the total weight of the nanoparticle.

2. An amplifying optical fiber according to claim 1, wherein the concentration of doping ions in the nanoparticle is between 0.5 and 15 wt. % of the total weight of the nanoparticle.

3. An amplifying optical fiber according to any one of the preceding claims, wherein the matrix material of the nanoparticles has a phonon energy that is lower than 20 % of the energy gap between the amplifying level and ground state level of the rare earth element during pumping, more preferably lower than 15 % of the energy gap.

4. An amplifying optical fiber according to any one of the preceding claims, wherein the matrix material of the nanoparticles has a phonon energy of at least 25 % of the energy gap between the pump level and the amplifying level of the rare earth element during pumping and at most 22 %, preferably 18.5 % of the energy gap between the amplifying level and ground state level of the rare earth element during pumping.

5. An amplifying optical fiber according to any one of the preceding claims, wherein the matrix material of the nanoparticles is amorphous.

6. An amplifying optical fiber according to any one of the preceding claims, wherein the silica-based matrix of the central core is doped with at least one element selected from the group, consisting of germanium, phosphorus, fluoride, boron and one or more combinations thereof.

7. An amplifying optical fiber according to any one of the preceding claims, wherein the total concentration of alumina in the central core is equal to or lower than 4 wt. %, preferably equal to or lower than 3.5 wt. % based on the total weight of the central core.

8. An amplifying optical fiber according to any one of the preceding claims, wherein the rare earth element is selected from the group, consisting of erbium, ytterbium, thulium, and a combination of these elements, preferably erbium with ytterbium.

9. An amplifying optical fiber according to any one of the preceding claims, wherein the optical fiber has background attenuation losses equal to or lower than 4 dB/km at 1200 nm, preferably equal to or lower than 2 dB/km at 1200 nm.

10. An amplifying optical fiber according to any one of the preceding claims, wherein the size of the nanoparticles is equal to or lower than 100 nm, preferably equal to or lower than 50 nm, more preferably equal to or lower than 20 nm.

11. Use of an amplifying optical fiber according to any one of the preceding claims in an optical amplifier or an optical laser.

12. Optical amplifier comprising at least a length of an amplifying optical fiber according to any one of the claims 1-10.

13. Optical laser comprising at least one portion of a fiber according to any one of the claims 1-10 and 12.

14. Method for manufacturing an amplifying optical fiber according to any of claims 1-10, the method comprising the following steps:
I) preparing a suspension of nanoparticles composed of a matrix material comprising doping ions of at least one rare earth element and which matrix material is alumina (Al₂O₃) or a combination of alumina (Al₂O₃) and phosphorus oxide (P₂O₅)
II) Providing a hollow silica-based tube having an inner porous layer prepared by a chemical vapor deposition (CVD) process;
III) Impregnating the inner porous layer of the hollow tube obtained in step II) with the suspension obtained in step I);
IV) Applying heat to the doped inner porous layer obtained in step III) to eliminate residual water and strengthen the nanoparticles;
V) Vitrifying and collapsing the hollow tube obtained in step IV) to obtain an optical preform;
VI) Optionally sleeving or overcladding the optical preform obtained in step V) to obtain an optical preform with modified ratio of central core diameter over optical cladding diameter;
VII) drawing the optical preform obtained in step V) or step VI) to obtain an optical fiber having a central core and an optical cladding surrounding the central core, wherein the central core is based on a silica matrix comprising nanoparticles, which nanoparticles are composed of a matrix material comprising doping ions of at least one rare earth element and which matrix material is alumina (Al₂O₃) or a combination of alumina (Al₂O₃) and phosphorus oxide (P₂O₅), wherein the concentration of the ions is between 0.01 wt. % and 1 wt. %, preferably between 0.01 wt. % and 0.2 wt. % of the total weight of the central core and wherein the distance between the ions in the particles is at least 0.4 nanometers and wherein the concentration of doping ions in the nanoparticle is between 0.1 and 20 wt. % of the total weight of the nanoparticle.

## Patentansprüche

1. Verstärkende Glasfaser mit einem Mittelkern und einem optischen Mantel, der den Mittelkern umgibt, wobei der Mittelkern auf einer Siliziumdioxid-Matrix mit Nanopartikeln basiert, die aus einem Matrixmaterial mit Dotierungsionen aus wenigstens einem Seltenerdelement zusammengesetzt sind, wobei das Matrixmaterial Aluminiumoxid (Al₂O₃) oder eine Kombination von Aluminiumoxid (Al₂O₃) und Phosphoroxid (P₂O₅) ist, wobei die Konzentration der Dotierungsionen zwischen 0,01 Gewichts-% und 1 Gewichts-%, vorzugsweise zwischen 0,01 Gewichts-% und 0,2 Gewichts-% des Gesamtgewichts des Mittelkerns beträgt und wobei der Abstand zwischen den Dotierungsionen in den Nanopartikeln wenigstens 0,4 Nanometer ist und wobei die Konzentration von Dotierungsionen in dem Nanopartikel zwischen 0,1 und 20 Gewichts-% des Gesamtgewichtes des Nanopartikels beträgt.

2. Verstärkende Glasfaser nach Anspruch 1, wobei die Konzentration der Dotierungsionen in dem Nanopartikel zwischen 0,5 und 15 Gewichts-% des Gesamtgewichtes des Nanopartikels beträgt.

3. Verstärkende Glasfaser nach einem der vorhergehenden Ansprüche, wobei das Matrixmaterial der Nanopartikel eine Phononenenergie hat, die kleiner als 20 % des Bandabstandes zwischen dem Verstärkungsniveau und dem Grundzustandsniveau des Seltenerdelements während des Pumpens ist, vorzugsweise kleiner als 15 % des Bandabstands.

4. Verstärkende Glasfaser nach einem der vorhergehenden Ansprüche, wobei das Matrixmaterial der Nanopartikel eine Phononenenergie von wenigstens 25 % des Bandabstandes zwischen dem Pumpniveau und dem Verstärkungsniveau des Seltenerdelements während des Pumpens und höchstens 22 %, vorzugsweise 18,5 %, des Bandabstandes zwischen dem Verstärkungsniveau und dem Grundzustandsniveau des Seltenerdelements während des Pumpens hat.

5. Verstärkende Glasfaser nach einem der vorhergehenden Ansprüche, wobei das Matrixmaterial der Nanopartikel amorph ist.

6. Verstärkende Glasfaser nach einem der vorhergehenden Ansprüche, wobei die siliziumdioxidbasierte Matrix des Mittelkerns mit wenigstens einem Element dotiert ist, das aus der aus Germanium, Phosphor, Fluorid, Bor und einer oder mehrerer Kombinationen davon bestehenden Gruppe ausgewählt ist.

7. Verstärkende Glasfaser nach einem der vorhergehenden Ansprüche, wobei die Gesamtkonzentration an Aluminiumoxid im Mittelkern kleiner oder gleich 4 Gewichts-%, vorzugsweise kleiner oder gleich 3,5 Gewichts-%, bezogen auf das Gesamtgewicht des Mittelkerns, ist.

8. Verstärkende Glasfaser nach einem der vorhergehenden Ansprüche, wobei das Seltenerdelement aus der aus Erbium, Ytterbium, Thulium und einer Kombination dieser Elemente, vorzugsweise Erbium mit Ytterbium, bestehenden Gruppe ausgewählt ist.

9. Verstärkende Glasfaser nach einem der vorhergehenden Ansprüche, wobei die Glasfaser Hintergrunddämpfungsverluste von kleiner oder gleich 4 dB/km bei 1200 nm, vorzugsweise kleiner oder gleich 2dB/km bei 1200 nm aufweist.

10. Verstärkende Glasfaser nach einem der vorhergehenden Ansprüche, wobei die Größe der Nanopartikel kleiner oder gleich 100 nm, vorzugsweise kleiner oder gleich 50 nm, besonders bevorzugst kleiner oder gleich 20 nm ist.

11. Verwendung einer verstärkenden Glasfaser gemäß einem der vorhergehenden Ansprüche in einem optischen Verstärker oder einem optischen Laser.

12. Optischer Verstärker, der wenigstens eine Länge einer verstärkenden Glasfaser gemäß einem der Ansprüche 1 bis 10 umfasst.

13. Optischer Laser, der wenigstens einen Teil einer Faser gemäß einem der Ansprüche 1 bis 10 und 12 umfasst.

14. Verfahren zur Herstellung einer verstärkenden Glasfaser gemäß einem der Ansprüche 1 bis 10, welches die folgenden Schritte umfasst:
I) Herstellen einer Suspension aus Nanopartikeln, die aus einem Matrixmaterial mit Dotierungsionen aus wenigstens einem Seltenerdelement zusammengesetzt sind, wobei das Matrixmaterial Aluminiumoxid (Al₂O₃) oder eine Kombination aus Aluminiumoxid (Al₂O₃) und Phosphoroxid (P₂O₅) ist,
II) Bereitstellen eines hohlen siliziumdioxidbasierten Rohres, das eine innere poröse Schicht hat, die durch chemische Gasphasenabscheidung (CVD) hergestellt wurde,
III) Imprägnieren der in Schritt II) erhaltenen, inneren porösen Schicht des hohlen siliziumdioxidbasierten Rohres mit der in Schritt I) erhaltenen Suspension,
IV) Erwärmen der in Schritt III) erhaltenen, dotierten, inneren porösen Schicht, um Restwasser zu beseitigen und die Nanopartikel zu verfestigen,
V) Verglasen und Kollabieren des in Schritt IV) erhaltenen hohlen Rohres, um eine optische Vorform zur erhalten,
VI) Optionales Überziehen oder Ummanteln der in Schritt V) erhaltenen optischen Vorform, um eine optische Vorform mit einem veränderten Verhältnis des Mittelkerndurchmessers zum Durchmesser des optischen Mantels zu erhalten,
VII) Ziehen der in Schritt V) oder VI) erhaltenen optischen Vorform, um eine Glasfaser zu erhalten, die einen Mittelkern und einen optischen Mantel aufweist, der den Mittelkern umgibt, wobei der Mittelkern auf einer Siliziumdioxid-Matrix mit Nanopartikeln basiert, die aus einem Matrixmaterial mit Dotierungsionen aus wenigstens einem Seltenerdelement zusammengesetzt sind, wobei das Matrixmaterial Aluminiumoxid (Al₂O₃) oder eine Kombination von Aluminiumoxid (Al₂O₃) und Phosphoroxid (P₂O₅) ist, wobei die Konzentration der Dotierungsionen zwischen 0,01 Gewichts-% und 1 Gewichts-%, vorzugsweise zwischen 0,01 Gewichts-% und 0,2 Gewichts-% des Gesamtgewichts des Mittelkerns beträgt und wobei der Abstand zwischen den Dotierungsionen in den Nanopartikeln wenigstens 0,4 Nanometer ist und wobei die Konzentration von Dotierungsionen in dem Nanopartikel zwischen 0,1 und 20 Gewichts-% des Gesamtgewichtes des Nanopartikels beträgt.

## Revendications

1. Fibre optique d'amplification comportant une âme centrale et un revêtement optique entourant l'âme centrale, dans laquelle l'âme centrale est basée sur une matrice de silice comprenant des nanoparticules, lesquelles nanoparticules sont composées d'un matériau de matrice comprenant des ions de dopage d' au moins un élément de terres rares et lequel matériau de matrice est de l'alumine (Al₂O₃) ou une combinaison d'alumine (Al₂O₃) et d'oxyde de phosphore (P₂O₅), dans laquelle la concentration des ions de dopage est entre 0,01 % en poids et 1 % en poids, de préférence entre 0,01 % en poids et 0,2 % en poids du poids total de l'âme centrale et dans laquelle la distance entre les ions de dopage dans les nanoparticules est d'au moins 0,4 nm et dans laquelle la concentration d'ions de dopage dans la nanoparticule est entre 0,1 % en poids et 20 % en poids du poids total de la nanoparticule.

2. Fibre optique d'amplification selon la revendication 1, dans laquelle la concentration d'ions de dopage dans la nanoparticule est entre 0,5 % en poids et 15 % en poids du poids total de la nanoparticule.

3. Fibre optique d'amplification selon l'une quelconque des revendications précédentes, dans laquelle le matériau de matrice des nanoparticules a une énergie de phonon qui est inférieure à 20 % de la bande interdite entre le niveau d'amplification et le niveau d'état fondamental de l'élément de terres rares au cours d'un pompage, de préférence inférieure à 15 % de la bande interdite.

4. Fibre optique d'amplification selon l'une quelconque des revendications précédentes, dans laquelle le matériau de matrice des nanoparticules a une énergie de phonon d'au moins 25 % de la bande interdite entre le niveau de pompage et le niveau d'amplification de l'élément de terres rares au cours du pompage et de plus 22 %, de préférence 18,5 % de la bande interdite entre le niveau d'amplification et le niveau d'état fondamental de l'élément de terres rares au cours du pompage.

5. Fibre optique d'amplification selon l'une quelconque des revendications précédentes, dans laquelle le matériau de matrice des nanoparticules est amorphe.

6. Fibre optique d'amplification selon l'une quelconque des revendications précédentes, dans laquelle la matrice à base de silice de l'âme centrale est dopée avec au moins un élément sélectionné dans le groupe se composant de germanium, phosphore, fluorure, bore et une ou plusieurs combinaisons de ceux-ci.

7. Fibre optique d'amplification selon l'une quelconque des revendications précédentes, dans laquelle la concentration totale d'alumine dans l'âme centrale est inférieure ou égale à 4 % en poids, de préférence inférieure ou égale à 3,5 % en poids sur la base du poids total de l'âme centrale.

8. Fibre optique d'amplification selon l'une quelconque des revendications précédentes, dans laquelle l'élément de terres rares est sélectionné dans le groupe se composant d'erbium, ytterbium, thulium et une combinaison de ces éléments, de préférence de l'erbium avec de l'ytterbium.

9. Fibre optique d'amplification selon l'une quelconque des revendications précédentes, dans laquelle la fibre optique présente des pertes d'atténuation d'arrière-plan inférieures ou égales à 4 dB/km à 1200 nm, de préférence inférieures ou égales à 2 dB/km à 1200 nm.

10. Fibre optique d'amplification selon l'une quelconque des revendications précédentes, dans laquelle la taille des nanoparticules est inférieure ou égale à 100 nm, de préférence inférieure ou égale à 50 nm, avec plus de préférence inférieure ou égale à 20 nm.

11. Utilisation d'une fibre optique d'amplification selon l'une quelconque des revendications précédentes dans un amplificateur optique ou un laser optique.

12. Amplificateur optique comprenant au moins une longueur d'une fibre optique d'amplification selon l'une quelconque des revendications 1 à 10.

13. Laser optique comprenant au moins une portion d'une fibre selon l'une quelconque des revendications 1 à 10 et 12.

14. Procédé de fabrication d'une fibre optique d'amplification selon l'une quelconque des revendications 1 à 10, le procédé comprenant les étapes suivantes .
I) la préparation d'une suspension de nanoparticules composées d'un matériau de matrice comprenant des ions de dopage d' au moins un élément de terres rares et lequel matériau de matrice est de l'alumine (Al₂O₃) ou une combinaison d'alumine (Al₂O₃) et d'oxyde de phosphore (P₂O₅) ;
II) la fourniture d'un tube creux à base de silice comportant une couche poreuse intérieure préparée par un processus de dépôt chimique en phase vapeur (CVD) ;
III) l'imprégnation de la couche poreuse intérieure du tube creux obtenu à l'étape II) avec la suspension obtenue à l'étape I) ;
IV) l'application de chaleur à la couche poreuse intérieure dopée obtenue à l'étape III) pour éliminer l'eau résiduelle et renforcer les nanoparticules ;
V) la vitrification et l'affaissement du tube creux obtenu à l'étape IV) pour obtenir une préforme optique ;
VI) facultativement le gainage ou le sur-revêtement de la préforme optique obtenue à l'étape V) pour obtenir une préforme optique avec un rapport modifié du diamètre d'âme centrale sur le diamètre de revêtement optique ;
VII) l'étirage de la préforme optique obtenue à l'étape V) ou à l'étape VI) pour obtenir une fibre optique ayant une âme centrale et un revêtement optique entourant l'âme centrale, dans lequel l'âme centrale est basée sur une matrice de silice comprenant des nanoparticules, lesquelles nanoparticules sont composées d'un matériau de matrice comprenant des ions de dopage d'au moins un élément de terres rares et lequel matériau de matrice est de l'alumine (Al₂O₃) ou une combinaison d'alumine (Al₂O₃) et d'oxyde de phosphore (P₂O₅), dans lequel la concentration des ions est entre 0,01 % en poids et 1 % en poids, de préférence entre 0,01 % en poids et 0,2 % en poids du poids total de l'âme centrale et dans lequel la distance entre les ions dans les particules est d'au moins 0,4 nm et dans lequel la concentration d'ions de dopage dans la nanoparticule est entre 0,1 % en poids et 20 % en poids du poids total de la nanoparticule.
